# EUROPEAN PATENT APPLICATION

(11) **EP 4 488 099 A1**
(43) Date of publication of application: **08.01.2025**
(21) Application number: 23386054.3
(22) Date of filing: 03.07.2023
(51) Int. Cl.: B60L 3/00, B60L 3/04, B60L 53/14, B60L 53/16, B60L 53/18, H01H 39/00, H02H 3/05, H02H 3/08

(54) **ELECTRICAL CONTROL SYSTEM AND ELECTRIC VEHICLE CHARGER**

(71) Applicant: Hitachi Energy Ltd, 8050 Zürich (CH)
(72) Inventor: Asimakopoulos, Panagiotis, 1110 MORGES (CH); Zhang, Zichi, 72358 VÄSTERÅS (SE)
(74) Representative: Epping - Hermann - Fischer

(57) **Abstract**

An electrical control system (1) for an electric vehicle charger (2) is specified, comprising
- a first contactor (5) connected to a first electrical conductive line (7) of a first type,
- a second contactor (6) connected to a second electrical conductive line (8) of a second type, and
- a circuit protection means, wherein
- the first contactor (5) and the second contactor (6) are configured to be provided between a power source (4) and a charging cable (3) connectable to the electric vehicle, and
- the circuit protection means is provided to at least one of the first contactor (5) and the second contactor (6).

Further, an electric vehicle charger is specified.

## Description

The present disclosure relates to and electrical control system and an electric vehicle charger.

Embodiments of the disclosure relate to an electrical control system, which is particular fault tolerant. A further embodiment relates an electric vehicle charger with such an electrical control system.

This is achieved by the subject-matter of the independent claims. Further embodiments are evident from the dependent claims and the following description.

An electrical control system for an electric vehicle charger is described. In particular, the electrical control system is part of the electric vehicle charger. In particular, the electrical control system is configured to manage a charging process of an electric vehicle, which is connected to the electric vehicle charger. Exemplarily, the electrical control system is configured to provide an electrical current to the electric vehicle and/or to receive an electrical current from the electric vehicle. The electrical control system is, for example, connected to at least one of a power conversion component, a control unit, and a communication unit.

Exemplarily, the power conversion component comprises at least one of a transformer, a rectifier and a power electronic, such as an inverter and/or a converter. The power conversion component is in particular configured for converting an alternating current, AC, voltage from a power source to a DC voltage.

Exemplarily, the control unit comprises at least one of a microcontroller, a microprocessor, an input/output interface for user interaction. The control unit is in particular configured to control an operation of the electric vehicle charger, e.g. starting the charging process and/or stopping the charging process. Further, the control unit can be configured to continuously monitor the charging process, a battery temperature and voltage levels. Particularly, the control unit can be configured, in case of an abnormal condition, being characteristic for a failure event, to trigger a protective event.

Exemplarily, the communication unit comprises at least one of a bus connection, an Ethernet connection, a Wi-Fi connection and a cellular connection. The communication unit is in particular configured to provide a communication of at least one of the power conversion component and the control unit, to the electrical control system. Additionally, the communication unit is in particular configured to provide a communication between the power conversion component and the control unit. Additionally, the communication unit is in particular configured to provide a communication to an external device, such as a mobile phone or a personal computer, for remote controlling and/or remote monitoring.

According to an embodiment, the electrical control system comprises a first contactor connected to a first electrical conductive line of a first type. The first contactor is in particular a DC contactor. The first type is in particular characteristic for a polarity of the first electrical conductive line.

According to the embodiment, the electrical control system comprises a second contactor connected to a second electrical conductive line of a second type. The second contactor is in particular a DC contactor. The second type is in particular characteristic for a polarity of the second electrical conductive line. The first type is different from the second type. Exemplarily, the first type is positive and the second type is negative or vice versa.

The first contactor and the second contactor are each exemplarily a switch, in particular an electromechanical switch. The first contactor and the second contactor are each configured to be in a closed state such that the electrical current is transmitted or in an open state such that the electrical current is blocked. This is that the first contactor and the second contactor are each exemplarily configured to connect and to disconnect a power source and the electric vehicle from one another.

For example, the first contactor and the second contactor are each configured to be controlled by the control unit. In particular, the first contactor and the second contactor are each in the open state or in the closed state dependent on the control unit. The first contactor and the second contactor are each, for example, configured to be in the open state when the failure event occurs. In particular, the first contactor and the second contactor are each automatically in the open state, i.e. are opened, when the failure event occurs. This is that the first contactor and the second contactor are each automatically in the open state when the failure event occurs independently from the control unit. The failure event is, for example, a short circuit event.

For example, the electric vehicle and the electric vehicle charger are electrically conductively connected for charging and discharging via the first electrical conductive line and the second electrical conductive line.

The first contactor and the second contactor, in particular also the first electrical conductive line and the second electrical conductive line, can each handle a power of at least 1 kilowatt and/or most 1000 kilowatts or at most 350 kilowatts.

According to the embodiment, the electrical control system comprises a circuit protection means. In case of the failure event, the protection means is configured to interrupt a flow of the electrical current, in particular to ensure the safety of the electric vehicle and/or the electric vehicle charger and components thereof.

For example, the circuit protection means is not formed of a single fuse.

According to the embodiment of the electrical control system, the first contactor and the second contactor are configured to be provided between a power source and a charging cable connectable to the electric vehicle. Exemplarily, the first electrical conductive line and the second electrical conductive line are each configured to be connected and/or are each connected to the power conversion component on a DC side of the power conversion component. For example, the first electrical conductive line and the second electrical conductive line are each configured to be connected and/or are each connected to the charging cable.

According to the embodiment of the electrical control system, the circuit protection means is provided to at least one of the first contactor and the second contactor. In particular, the circuit protection means is directly electrically conductively connected to the first contactor and/or the second contactor. Additionally or alternatively, the circuit protection means is electrically insulated to the first contactor and/or the second contactor.

If the protection means comprises an electronic component, there are at least two electronic components being electrically conductively connected to the first contactor and/or the second contactor. If the protection means comprises an insulating component, there is at least one insulating component being electrically insulated connected to the first contactor and/or the second contactor. The protection means can further comprises the electronic components and the insulating component.

Advantageously, with using the first contactor and/or the second contactor with the protection means, an increased reliability, robustness and safety of a DC protection during short-circuit events can be achieved.

According to a further embodiment of the electrical control system, the circuit protection means comprises an enclosure enclosing the first contactor and the second contactor. In particular, the enclosure delimits a cavity, in which the first contactor and the second contactor are arranged. For example, the enclosure completely surrounds the first contactor and the second contactor three dimensionally, i.e. in lateral directions and in vertical direction. The enclosure comprises or consists of, for example, an electrically insulating material.

For example, the first contactor and the second contactor are arranged spaced apart from one another in vertical direction. Exemplarily, the first contactor and the second contactor are arranged above one another in vertical direction. In particular, the first contactor and the second contactor completely overlap in top view along the vertical direction.

The first contactor and the second contactor are exemplarily arranged within a first region of the electrical control system, wherein the first region has a first extent in lateral directions and vertical direction. The enclosure is exemplarily arranged within a second region of the electrical control system, wherein the second region has a second extent in lateral directions and vertical direction. The second extent is at most 30 %, at most 20 % or at most 10 % bigger than the first extent.

When the failure event happens, a short-circuit current can cause the first contactor and the second contactor to be in the open state, i.e. to open, such that electric arcs are generated in the first contactor and/or the second contactor due to a comparatively large power provided to the first electrical conductive line and the second electrical conductive line. Advantageously, the enclosure keeps all ionized hot gas generated by the electric arc inside the enclosure and does not allow further damage outside of the enclosure.

Advantageously, such a circuit protection means is low in cost, size and complexity. Further, with such a circuit protection means advantageously potential explosions and fire caused by the short-circuit event can be avoided.

According to a further embodiment of the electrical control system, the enclosure comprises an outer wall. The outer wall comprises, for example, a top wall and a bottom wall opposite the top wall, wherein the top wall and the bottom wall are connected by at least one side wall, e.g. four side walls. Inner side surfaces of the walls facing one another delimit in particular the cavity.

According to a further embodiment of the electrical control system, the enclosure comprises a plurality of recesses completely penetrating the outer wall. Each of the recesses have, in particular, a main extension direction. Exemplarily, the recesses are arranged in the top wall, the bottom wall and the side wall extending over their whole extent in lateral directions. "Over their whole extent" means here that the extent of the recesses along the respective main extension direction is at least 80 % and at most 90 % of a maximal extent of the respective wall in the respective main extension direction. At least some or all of the recesses are arranged, for example, parallel to one another.

The recesses have, for example, a width perpendicular to the respective main extension directions, of at least 1 mm and at most 5 mm, e.g. approximately 2 mm.

In particular, the enclosure is a non-hermetic enclosure. This is that the enclosure does not hermetically seal the first contactor and the second contactor due to the recesses.

Thus, advantageously high pressure and ionized hot gas generated by the electric arcs can be released from the cavity.

According to a further embodiment of the electrical control system, the electrical control system further comprises a third contactor connected to the first electrical conductive line and a fourth contactor connected to the second electrical conductive line. The third contactor and the fourth contactor are embodied similar or equally to the first contactor and the second contactor described herein above.

According to a further embodiment of the electrical control system, the first contactor and the third contactor are connected in series, and the second contactor and the fourth contactor are connected in series. For example, the third contactor and the fourth contactor are arranged spaced apart from one another in vertical direction. Exemplarily, the third contactor and the fourth contactor are arranged spaced apart from the first contactor and the second contactor in lateral directions. Exemplarily, the third contactor and the fourth contactor are arranged above one another in vertical direction. In particular, the third contactor and the fourth contactor completely overlap in top view along the vertical direction. For example, the third contactor and the fourth contactor are arranged subordinated the first contactor and the second contactor.

According to a further embodiment of the electrical control system, the circuit protection means comprises a further enclosure enclosing the third contactor and the fourth contactor. The further enclosure is embodied similar or equally to the enclosure described herein above. For example, the further enclosure is arranged subordinated the enclosure.

In this embodiment, the circuit protection means has, for example, no fuse. When the failure event occurs, at least three contactors or all contactors are in the open state, i.e. are opened. The electrical arcs voltage of the respective contactors is much higher than the system voltage, hence a short-circuit current is limited and interrupted by the respective contactors themselves without any fuse.

In particular, the contactors generate the electric arc voltage fast enough to break the short-circuit current. This is valid with the condition that a circuit time constant must be low and the electric arc voltage rise must be fast, in particular within at most 10 milliseconds, at least 5 milliseconds or at least at most 2 milliseconds.

According to a further embodiment of the electrical control system, the further enclosure comprises a further outer wall. The further outer wall is embodied similar or equally to the outer wall described herein above.

According to a further embodiment of the electrical control system, the further enclosure comprises a plurality of recesses completely penetrating the further outer wall. The recesses in the further outer wall are embodied similar or equally to the recesses in the outer wall described herein above.

According to a further embodiment of the electrical control system, a fuse is connected to the first contactor or the second contactor in series. In particular, the fuse is located on the first electrical conductive line or the second electrical conductive line. The fuse is configured to interrupt the electrical current provided to the first electrical conductive line or the second electrical conductive line. Exemplarily, the electrical current is interrupted by melting a fuse element of the fuse when an excessive current, such as the short-circuit current, occurs.

According to a further embodiment of the electrical control system, the fuse is located outside the enclosure. In particular, the fuse is configured to interrupt the short-circuit current during the failure event after a predetermined first time interval.

Advantageously, the contactors are configured to withstand the short-circuit current within the predetermined first time interval until the fuse breaks the short-circuit current. During the predetermined first time interval, the enclosure around the contactors advantageously keeps an explosion and a fire inside the enclosure.

According to a further embodiment of the electrical control system, the circuit protection means comprises a pyro-switch and the fuse. The pyro-switch is configured to be in a closed state for transmitting an electrical current or in an open state for blocking an electrical current.

For example, the pyro-switch comprises a sensing device. The sensing device is configured to sense the failure event, e.g. the short-circuit current. The sensing device is, for example, configured to sense a thermal property and/or an electromagnetic property of the electrical control system, in particular in a region of the pyro-switch. The pyro-switch is in the closed state or in the open state dependent on the sensing device. The sensing device can be a passive device, which functions without any connection to further devices outside the pyro-switch.

The pyro-switch comprises, for example, an explosive charge. For example, if the failure event is sensed by the sensing device, the explosive charge is ignited for a rapid opening. Exemplarily, the pyro-switch is configured to interrupt the short-circuit current during the failure event after a predetermined second time interval. In particular, the predetermined second time interval is shorter than the predetermined first time interval. In particular, the pyro-switch is configured to interrupt the short-circuit current within at most 10 milliseconds, at least 5 milliseconds or at least at most 2 milliseconds.

In particular, the pyro-switch can change the state passively, e.g. without a connection to the control unit.

According to a further embodiment of the electrical control system, the pyro-switch and the fuse are connected to at least one of the first contactor and the second contactor. In particular, the pyro-switch and the fuse are directly electrically conductively connected to the first contactor and/or the second contactor.

According to a further embodiment of the electrical control system, the pyro-switch and the fuse are connected in series, and the pyro-switch and the fuse are connected in parallel with the first contactor or the second contactor.

According to a further embodiment of the electrical control system, the pyro-switch is a normally open pyro-switch being configured to not transmit an electrical current until a threshold of the electrical current is exceeded. The threshold of the electrical current can be predetermined, e.g. dependent on an electrical current for which the electrical control system functions normally. If the threshold of the electrical current is exceeded, the failure event occurs, for example.

Exemplarily, when at least one of the contactors is in the open state, without receiving an open command, the short-circuit current flows through the respective contactor and force it to open. In this case, the pyro-switch parallel to the respective contactor is triggered to be in the closed state, i.e. closes, and bypasses the short-circuit current.

In particular, the pyro-switch is triggered completely passively. Such a passive triggering is advantageously simple and less cost intensive.

Alternatively, the electrical current in the electrical control system can be monitored, wherein the pyro-switch is trigger dependent on the monitored electrical current. This is, for example, if the electrical control system monitors the electrical current exceeding the threshold, the pyro-switch is triggered to be in the closed state, i.e. to close.

According to a further embodiment of the electrical control system, the pyro-switch and the fuse are connected in parallel, and the pyro-switch and the fuse are connected in series with the first contactor or the second contactor. This is that the first electrical conductive line or the second electrical conductive line are provided with the pyro-switch and the fuse.

According to a further embodiment of the electrical control system, the pyro-switch is a normally closed pyro-switch configured to transmit an electrical current until the threshold of the electrical current is exceeded. The pyro-switch is, for example, a pyro-fuse.

If the failure event takes place and the short-circuit current opens at least one of the contactors, the pyro-fuse automatically opens the pyro-fuse. The pyro-fuse advantageously limits and interrupts the whole range of the short-circuit current, which avoids contactor explosion and damage due to massive electric arc energy of the contactors.

According to a further embodiment of the electrical control system, the circuit protection means comprises a further pyro-switch and a further fuse. The further pyro-switch and the further fuse are embodied similar or equally to the pyro-switch and the fuse described herein above.

According to a further embodiment of the electrical control system, the pyro-switch and the fuse are connected in series, and the further pyro-switch and the further fuse are connected in series.

According to a further embodiment of the electrical control system, the pyro-switch and the fuse are connected to the first electrical conductive line and the second electrical conductive line and the pyro-switch and the fuse are located on a side of the first contactor and the second contactor facing the power source.

According to a further embodiment of the electrical control system, the further pyro-switch and the further fuse are connected to the first electrical conductive line and the second electrical conductive line and the further pyro-switch and the further fuse are located on a side of the first contactor and the second contactor facing the charging cable.

According to a further embodiment of the electrical control system, the further pyro-switch is the normally open pyro-switch being configured to not transmit an electrical current until a threshold of the electrical current is exceeded.

If the failure event takes place, the pyro-switch and the further pyro switch are triggered passively and closes, such that the short-circuit current is bypassed from the contactors into the pyro-switch and fuse as well as the further pyro-switch and the further fuse. In this case, the fuse and the further fuse break the short-circuit current. A branch of the pyro-switch and the fuse as well as a further branch of the further pyro-switch and the further fuse, are connected before and after the contactor to cover both the short-circuit current coming from the side facing the power source and the side facing the electric vehicle.

According to a further embodiment of the electrical control system, all pyro-switches and further pyro-switches are triggered automatically when the first contactor and/or the second contactor are forced to be in the open state without sending an open command from the control unit to at least one of the contactors. This is that regardless of a type of the pyro-switches, i.e. being normally open or normally closed, the pyro-switches react automatically and independently from the control unit to the failure event, advantageously leading to improved protective measures.

A further embodiment relates to an electric vehicle charger, in particular, comprising an electrical control system described herein above. Therefore, the features as described in connection with the electric vehicle charger are also applicable for the electrical control system and vice versa.

According to an embodiment, the electric vehicle charger comprises a connection to the power source, and the charging cable. In particular, the power source is an electrical grid, e.g. an AC grid.

According to a further embodiment of the electric vehicle charger, the charging cable comprises a Combined Charging System, CCS, plug, and/or a Megawatt Charging System, MCS, plug. In particular, the electric vehicle charger has a socket configured to receive the charging cable.

The accompanying Figures are included to provide a further understanding. In the Figures, elements of the same structure and/or functionality may be referenced by the same reference signs. It is to be understood that the embodiments shown in the Figures are illustrative representations and are not necessarily drawn to scale.

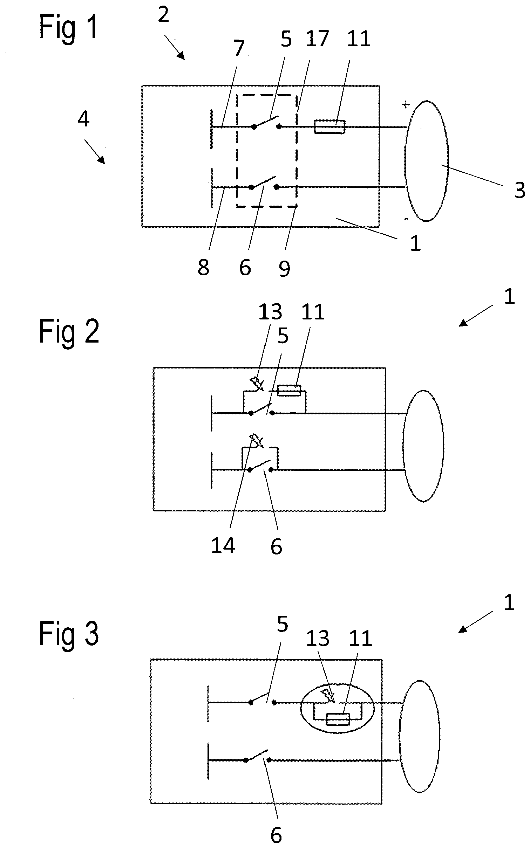

Figures 1, 2, 3, 4 and 5 each shows a schematic view of an electrical control system according to an exemplary embodiment.

The electrical control system 1 according to the exemplary embodiment of Figure 1 is, for example, part of an electric vehicle charger 2. The electric vehicle charger 2 is connected, e.g. to a power source 4 being In particular an AC electrical grid. Further, the electric vehicle is configured to be connected to a charging cable 3 for charging and/or discharging an electric vehicle.

The electrical control system 1 comprises a first contactor 5 connected to a first electrical conductive line 7 of a first type and a second contactor 6 connected to a second electrical conductive line 8 of a second type. The first type is of a positive polarity and the second type is of a negative polarity. The first contactor 5 is spaced apart from the second contactor 6 such that the two contactors are arranged close to one another physically. "Close to one another" means that the first contactor 5 and the second contactor 6 are positioned or located on the electrical conductive lines 7, 8 such that a distance between the contactors is minimized.

Exemplarily, the electric vehicle charger comprises a power conversion component. The first electrical conductive line 7 and the second electrical conductive line 8 are, for example, connected to the power conversion component, in particular to a first terminal and a second terminal of the power conversion component.

Further, a fuse 11 is connected to the first contactor 5 in series. The fuse 11 is located between the first contactor 5 and a side of the charging cable 3. This is that the fuse 11 faces the side of the charging cable 3.

Further, the electrical control system 1 comprises a circuit protection means. The circuit protection means comprises an enclosure 9 enclosing the first contactor 5 and the second contactor 6. The enclosure 9 completely encloses the first contactor 5 and the second contactor 6 in a three dimensionally. The enclosure 9 comprises an outer wall, which is completely penetrated by a plurality of recesses 17.

The circuit protection means of the electrical control system 1 according to the exemplary embodiment of Figure 2 comprises in comparison to Figure 1, a pyro-switch 13, a fuse 11 and a further pyro-switch 14.

The pyro-switch 13 and the fuse 11 are connected in series. The pyro-switch 13 faces a side of the power source 4 and the fuse 11 faces a side of the charging cable 3. Further, the combination of the pyro-switch 13 and the fuse 11 arranged in series are connected in parallel to the first contactor 5.

In this embodiment, the pyro-switch 13 and the further pyro-switch 14 are each a normally open pyro-switch being configured to not transmit an electrical current until a threshold of the electrical current is exceeded.

The further pyro-switch 14 is connected in parallel to the second contactor 6.

The circuit protection means of the electrical control system 1 according to the exemplary embodiment of Figure 3 comprises in comparison to Figure 1 and Figure 2, a pyro-switch 13 and a fuse 11. The pyro-switch 13 and the fuse 11 are connected in parallel. The combination of the pyro-switch 13 and the fuse 11 are connected in series to the first contactor 5.

The combination of the pyro-switch 13 and the fuse 11 are located between the first contactor 5 and a side of the charging cable 3. This is that the pyro-switch 13 and the fuse 11 both face the side of the charging cable 3.

In this embodiment, the pyro-switch 13 is a normally closed pyro-switch configured to transmit an electrical current until a threshold of the electrical current is exceeded.

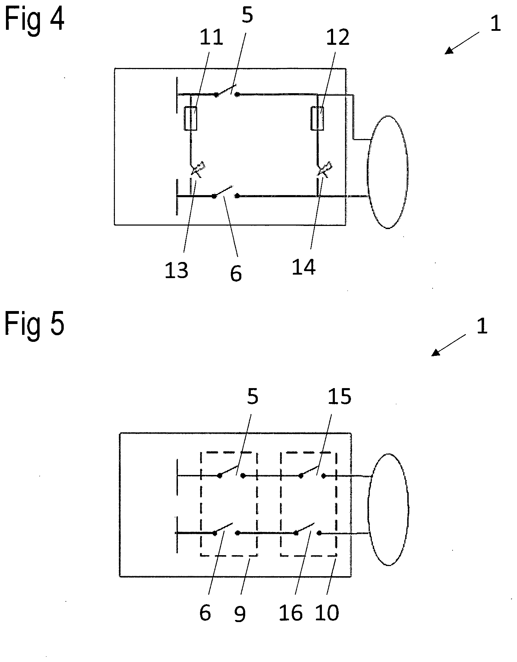

The circuit protection means of the electrical control system 1 according to the exemplary embodiment of Figure 4 comprises in comparison to Figure 1, 2 and 3, a pyro-switch 13, a fuse 11, a further pyro-switch 14 and a further fuse 12. The pyro-switch 13 and the fuse 11 are connected in series, forming a branch of the circuit protection means. Further, the further pyro-switch 14 and the further fuse 12 are connected in series, forming a further branch of the circuit protection means.

The branch connects the first electrical conductive line 7 and the second electrical conductive line 8 on a side facing the power source 4. The further branch connects the first electrical conductive line 7 and the second electrical conductive line 8 on a side facing the charging cable 3. The fuse 11 and the further fuse 12 face the first electrical conductive line 7 and the pyro switch and the further pyro-switch 14 face the second electrical conductive line 8.

In this embodiment, the pyro switch 13 and the further pyro-switch 14 are each a normally open pyro-switch being configured to not transmit an electrical current until a threshold of the electrical current is exceeded.

The circuit protection means of the electrical control system 1 according to the exemplary embodiment of Figure 5 comprises in comparison to Figures 1, 2, 3 and 4 an enclosure 9 of Figure 1 and a further enclosure 10. The electrical control system 1 further comprises a third contactor 15 connected to the first electrical conductive line 7 and a fourth contactor 16 connected to the second electrical conductive line 8. The third contactor 15 is connected in series to the first contactor 5 and the fourth contactor 16 is connected in series to the second contactor 6. The third contactor 15 and the fourth contactor 16 both face the charging cable 3.

The third contactor 15 is spaced apart from the fourth contactor 16 such that the two contactors are arranged close to one another physically. "Close to one another" means that the third contactor 15 and the fourth contactor 16 are positioned or located on the electrical conductive lines 7, 8 such that a distance between the contactors is minimized.

The further enclosure 10 completely encloses the third contactor 15 and the fourth contactor 16. The further enclosure 10 completely encloses the third contactor 15 and the fourth contactor 16 in a three dimensionally. The further enclosure 10 comprises a further outer wall, which is completely penetrated by a plurality of recesses 17.

The exemplary embodiments, in particular features of the exemplary embodiments, of the Figures can be combined with one another.

### Reference Signs

- 1: electrical control system
- 2: electric vehicle charger
- 3: charging cable
- 4: power source
- 5: first contactor
- 6: second contactor
- 7: first electrical conductive line
- 8: second electrical conductive line
- 9: enclosure
- 10: further enclosure
- 11: fuse
- 12: further fuse
- 13: pyro-switch
- 14: further pyro-switch
- 15: third contactor
- 16: fourth contactor
- 17: recess

## Claims

1. Electrical control system (1) for an electric vehicle charger (2), comprising
- a first contactor (5) connected to a first electrical conductive line (7) of a first type,
- a second contactor (6) connected to a second electrical conductive line (8) of a second type, and
- a circuit protection means, wherein
- the first contactor (5) and the second contactor (6) are configured to be provided between a power source (4) and a charging cable (3) connectable to the electric vehicle, and
- the circuit protection means is provided to at least one of the first contactor (5) and the second contactor (6).

2. Electrical control system (1) according to claim 1, wherein
- the circuit protection means comprises an enclosure (9) enclosing the first contactor (5) and the second contactor (6) .

3. Electrical control system (1) according to claim 2, wherein
- the enclosure (9) comprises an outer wall, and
- the enclosure (9) comprises a plurality of recesses (17) completely penetrating the outer wall.

4. Electrical control system (1) according to one of claims 2 or 3, wherein
- the electrical control system (1) further comprises a third contactor (15) connected to the first electrical conductive line (7) and a fourth contactor (16) connected to the second electrical conductive line (8),
- the first contactor (5) and the third contactor (15) are connected in series,
- the second contactor (6) and the fourth contactor (16) are connected in series, and
- the circuit protection means comprises a further enclosure (10) enclosing the third contactor (15) and the fourth contactor (16).

5. Electrical control system (1) according to claim 4, wherein
- the further enclosure (10) comprises a further outer wall, and
- the further enclosure (10) comprises a plurality of recesses (17) completely penetrating the further outer wall.

6. Electrical control system (1) according to one of claims 2 to 5,
- a fuse (11) is connected to the first contactor (5) or the second contactor (6) in series, and
- the fuse (11) is located outside the enclosure (9).

7. Electrical control system (1) according to one of claims 1 to 5, wherein
- the circuit protection means comprises a pyro-switch (13) and a fuse (11), and
- the pyro-switch (13) and the fuse (11) are connected to at least one of the first contactor (5) and the second contactor (6) .

8. Electrical control system (1) according to claim 7, wherein
- the pyro-switch (13) and the fuse (11) are connected in series, and
- the pyro-switch (13) and the fuse (11) are connected in parallel with the first contactor (5) or the second contactor (6) .

9. Electrical control system (1) according to claim 8, wherein
- the pyro-switch (13) is a normally open pyro-switch being configured to not transmit an electrical current until a threshold of the electrical current is exceeded.

10. Electrical control system (1) according to claim 7, wherein
- the pyro-switch (13) and the fuse (11) are connected in parallel, and
- the pyro-switch (13) and the fuse (11) are connected in series with the first contactor (5) or the second contactor (6) .

11. Electrical control system (1) according to claim 10, wherein
- the pyro-switch (13) is a normally closed pyro-switch configured to transmit an electrical current until a threshold of the electrical current is exceeded.

12. Electrical control system (1) according to claim 7, wherein
- the circuit protection means comprises a further pyro-switch (14) and a further fuse (12),
- the pyro-switch (13) and the fuse (11) are connected in series,
- the further pyro-switch (14) and the further fuse (12) are connected in series,
- the pyro-switch (13) and the fuse (11) are connected to the first electrical conductive line (7) and the second electrical conductive line (8) and the pyro-switch (13) and the fuse (11) are located on a side of the first contactor (5) and the second contactor (6) facing the power source (4), and
- the further pyro-switch (14) and the further fuse (12) are connected to the first electrical conductive line (7) and the second electrical conductive line (8) and the further pyro-switch (14) and the further fuse (12) are located on a side of the first contactor (5) and the second contactor (6) facing the charging cable (3), and
- the further pyro-switch (14) is a normally open pyro-switch being configured to not transmit an electrical current until a threshold of the electrical current is exceeded.

13. Electrical control system (1) according to one of the claims 7 to 13, wherein
- all pyro-switches (13) and further pyro-switches (14) are triggered automatically when the first contactor (5) and/or the second contactor (6) are forced to be in the open state without sending an open command from a control unit to at least one of the contactors (5, 6).

14. Electric vehicle charger (2), comprising
- the electrical control system (1) according to one of the claims 1 to 13,
- a connection to the power source (4), and
- the charging cable (3).

15. Electric vehicle charger (2) according to claim 15, wherein
- the charging cable (3) comprises a Combined Charging System, CCS, plug, and/or a Megawatt Charging System, MCS, plug.
